Europäisches Patentamt

European Patent Office

Office européen des brevets

(11) Veröffentlichungsnummer: **0 446 926 A1**

# (12) EUROPÄISCHE PATENTANMELDUNG

(21) Anmeldenummer: **91103954.3**

(22) Anmeldetag: **14.03.91**

(51) Int. Cl.5: **C02F 3/12**, C02F 3/26, B01D 36/02

(30) Priorität: **14.03.90 DE 9003131 U**

(43) Veröffentlichungstag der Anmeldung:
**18.09.91 Patentblatt 91/38**

(84) Benannte Vertragsstaaten:
**BE CH DE ES FR GB GR IT LI NL**

(71) Anmelder: **ROEDIGER AG**
**Jurastrasse 12**
**CH-4142 Münchenstein(CH)**

(72) Erfinder: **Neumann, Hermann**
**Stargarder Strasse 5**
**W-6000 Frankfurt/Main 90(DE)**

(74) Vertreter: **Jochem, Bernd, Dipl.-Wirtsch.-Ing.**
**Patentanwälte Beyer & Jochem Postfach 17**
**01 45 Staufenstrasse 36**
**W-6000 Frankfurt/Main 1(DE)**

(54) **Vorrichtung zur Klärung von Abwasser.**

(57) Die Vorrichtung zur Klärung von Abwasser hat mehrere hintereinander geschaltete Filtereinrichtungen (16, 18, 20) und eine biologische Reinigungsstufe (28). Die mechanischen Filtereinrichtungen sind zusammen mit einem Pufferbehälter (22) für abgefilterte Feststoffe in einem wasserdicht geschlossenen, tauchbaren Großbehälter (10) mit Anschlüssen für einen Wassereinlauf (12) und einen Wasserauslauf (14) installiert. In demselben oder vorzugsweise wenigstens einem weiteren wasserdicht geschlossenen Großbehälter ist zusätzlich eine einlaßseitig an die Filtereinrichtungen (16, 18, 20) und auslaßseitig an den Wasserauslauf angeschlossene Kläreinrichtung (28) mit Sauerstoffzufuhr installiert.

EP 0 446 926 A1

Die Erfindung betrifft eine Vorrichtung zur Klärung von kommunalem Abwasser mit mehreren hintereinander geschalteten Filtereinrichtungen.

Kommunale Abwasser-Kläranlagen sind normalerweise für einen verhältnismäßig großen Abwasseranfall ausgelegt und bestehen aus mehreren großen Einheiten, die je für sich stationär gebaut und in der vorgesehenen Reihenfolge miteinander verbunden werden. Es sind zwar auch schon mechanische Filtereinrichtungen in verschiedenen, u. a. transportablen Ausführungen bekanntund zu "Behandlungs-Straßen" vormontiert worden, aber auch solche Anlagen können des öfteren nicht eingesetzt werden, insbesondere wenn auch noch eine biologische Stufe hinzutreten soll, die viel Platz beansprucht.

In Ferienorten an der See, die bisher noch keine Kläranlagen haben, sondern die Abwässer ungeklärt über mehrere Rohre in das Meer ableiten, stehen vielfach die geographischen und baulichen Gegebenheiten dem Bau einer Kläranlage entgegen. Die Orte erstrecken sich oft über große Entfernungen im wesentlichen auf gleichem Niveau am Ufer entlang. Um für eine entsprechend lange Abwasser-Sammelleitung künstlich ein Gefälle zu erzeugen, müßte durch umfangreiche Bauarbeiten ein sehr tiefer Graben ausgehoben werden. Außerdem müßten die Uferstraße und/oder andere bestehende Anlagen und ggf. Gebäude zerstört werden. Schließlich soll eine Kläranlage in einem Ferienort nach Möglichkeit überhaupt nicht in Erscheinung treten.

Der Erfindung liegt daher die Aufgabe zugrunde, eine Vorrichtung der eingangs genannten Art zu schaffen, die sich für den Einsatz unter den beschriebenen Umständen eignet, nur mimale Tiefbauarbeiten erforderlich macht und keinen Bau- oder wertvollen Stellplatz beansprucht.

Vorstehende Aufgabe wird erfindungsgemäß dadurch gelöst, daß die mechanischen Filtereinrichtungen zusammen mit einem Pufferbehälter für abgefilterte Feststoffe in einem wasserdicht geschlossenen, tauchbaren Großbehälter mit Anschlüssen für einen Wassereinlauf und einen Wasserauslauf und in demselben und/oder wenigstens einem weiteren wasserdicht geschlossenen Großbehälter zusätzlich eine einlaßseitig an die Filtereinrichtungen (16, 18, 20) und auslaßseitig an den Wasserauslauf angeschlossene Kläreinrichtung mit Sauerstoffzufuhr installiert sind.

Die vorgeschlagene Vorrichtung bietet den Vorteil, daß sie einfach nur an die vorhandenen Abwasserrohre, die z. B. ins Meer, einen See oder Fluß führen, angeschlossen zu werden braucht. Die erfindungsgemäßen Großbehälter können im wesentlichen vollständig unter die Wasseroberfläche versenkt werden, so daß sie nicht stören. Auch wenn der Kapazität der Gesamtheit der zur Klärung des Abwassers installierten Einrichtungen durch die räumlichen Beschränkungen der Großbehälter Grenzen gesetzt sind, reicht sie in vielen Fällen für die Zahl von Häusern und Fabrikationsstätten aus, die bisher an ein einzelnes Abwasserrohr angeschlossen sind. Außerdem besteht die Möglichkeit, im Hinblick auf den Einbau in die Großbehälter jeweils besonders raumsparende Einrichtungen zur Abwasserreinigung zu verwenden. Aus diesem Grunde werden erfindungsgemäß mehrstufige mechanische Filtereinrichtungen, die z. B. mittels Rechen oder gelochter Trommeln oder dgl. das Abwasser von Feststoffen befreien, statt eines Absetzbeckens eingesetzt. In die biologische Reinigungsstufe kann z. B. im wesentlichen ausschließlich Sauerstoffgas statt, wie üblich Luft, eingeleitet und dadurch der aerobe Stoffwechselvorgang intensiviert und die Anlage kleiner gebaut werden. Zum Eindicken des abgefilterten Schlamms läßt sich z. B. eine nur wenig Raum beanspruchende Siebtrommel verwenden, und auch die sonstigen Funktionen lassen sich intensivieren und, soweit möglich, mit verhältnismäßig kleinen mechanischen Einrichtungen ausführen.

Vorzugsweise wird die als biologische Stufe dienende Kläreinrichtung mit Überdruck betrieben, indem Luft oder Sauerstoffgas mit erhöhtem Druck feinblasig und über die Fläche gleichmäßig von unten in das zu reinigende Abwasser eingeleitet wird. Das Druckniveau wird dabei durch ein Druck-Regulierventil bzw. Höchstdruckventil an einem oben im Behälter angeordneten Luftauslaß bestimmt. Der Betrieb mit Überdruck bietet den Vorteil, daß sich ein größeres Gasvolumen im Wasser löst und dadurch die biologischen Abbauprozesse gefördert werden. Außerdem wirkt der erhöhte Innendruck dem äußeren Wasserdruck entgegen und damit statisch entlastend.

In bevorzugter praktischer Ausführung sind die Großbehälter mit den darin installierten Einrichtungen zur Klärung des Abwassers schwimmfähig. Sie können aber auch für einen Transport über Land, z. B. auf Tiefladern, dimensioniert werden. Nach dem Transport zu einem Einsatzort an einem Meer, See oder Fluß werden sie dort durch Fluten oder Ballast auf dem Boden abgesetzt und ggf. verankert und eingeschlämmt. Dabei kann durch Ausbaggern, Fundamentierung oder einstellbare Lager für horizontale Ausrichtung gesorgt werden.

Ein Ausführungsbeispiel der Erfindung wird nachstehend anhand der Zeichnung näher erläutert. Es zeigen:

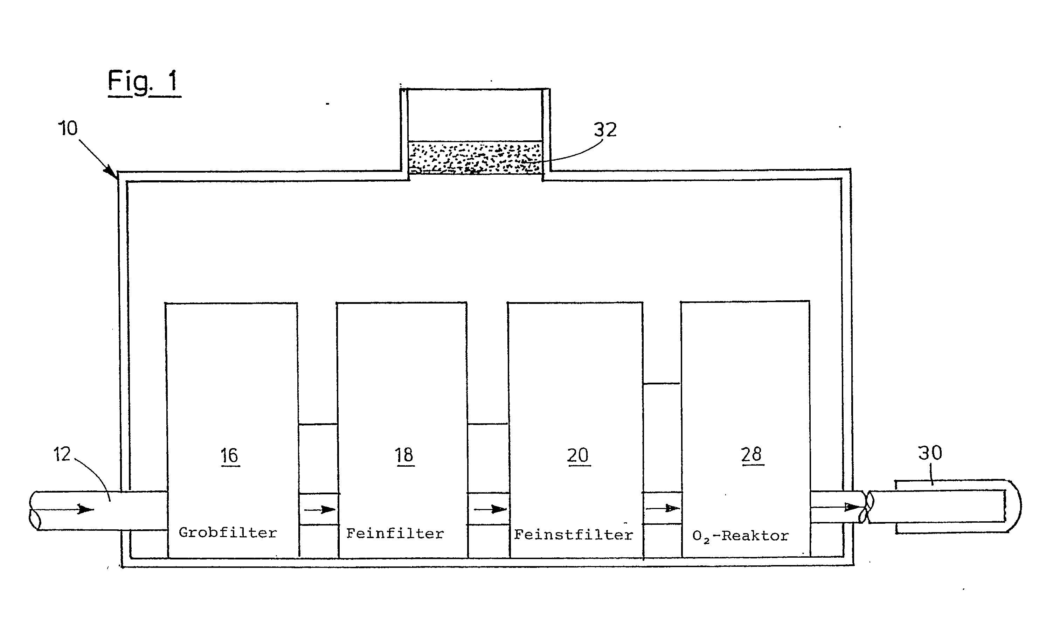

Fig. 1      einen vereinfachten Längsschnitt durch eine in einem Großbehälter installierte Kläranlage;

Fig. 2      eine Draufsicht auf die in dem Großbehälter installierten Einheiten;

Fig. 3 A, B    Quer- und Längsschnitt eines als biologische Reinigungsstufe dienenden Großbehälters.

Der in der Zeichnung mit 10 bezeichnete Großbehälter ist bis auf bestimmte Öffnungen allseitig wasserdicht geschlossen und im Bespielsfall schwimmfähig. Er kann die Größe eines Flußschiffs haben. Das zu klärende Abwasser wird durch einen Abwassereinlauf 12 zugeführt, und das geklärte Abwasser verläßt den Großbehälter über einen Wasserauslauf 14. An den Abwassereinlauf 12 sind im Innenraum des Großbehälters 10 in Fließrichtung hintereinander angeschlossen eine Grobfilter-Einrichtung 16, eine Feinfilter-Einrichtung 18 und eine Feinstfilter-Einrichtung 20. Es handelt sich dabei um an sich bekannte maschinelle Filtereinrichtungen, die mit Rechen, Maschen, Siebtrommeln u. dgl. die Feststoffe in dem hindurchgeleiteten Abwasser festhalten und aussondern. Es ist für Badestrände schon sehr viel gewonnen, wenn nur die das Abwasser verunreinigenden Feststoffe aus dem Abwasser entfernt werden, bevor dieses in den Vorfluter gelangt. Normalerweise wird heute aber zusätzlich eine biologische Reinigungsstufe gefordert.

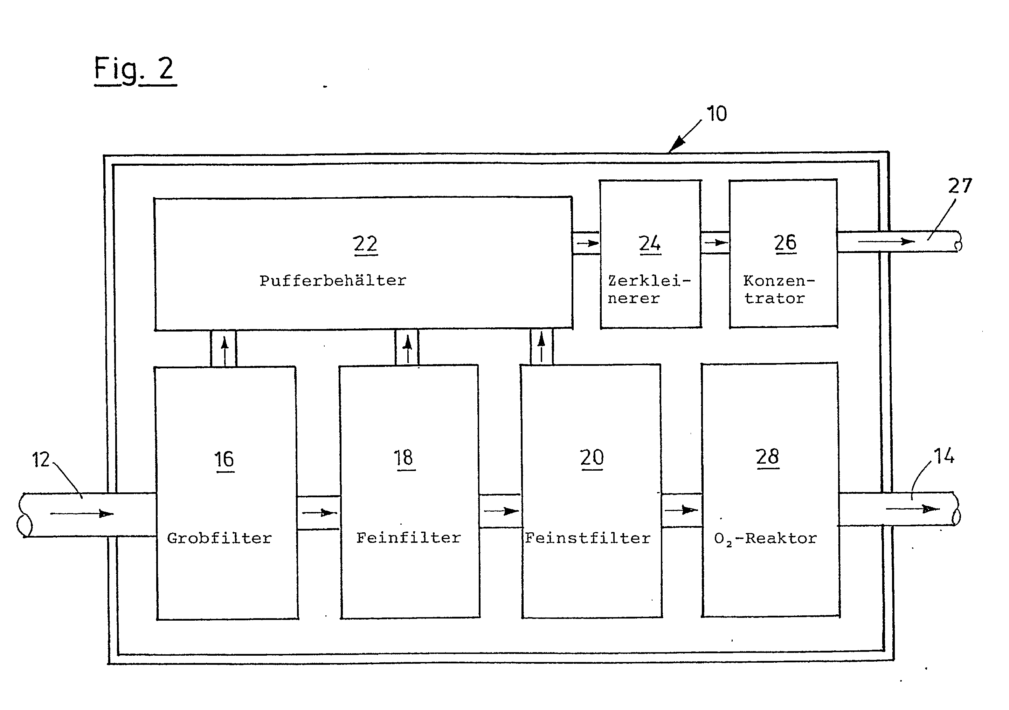

Die von den Filtereinrichtungen 16, 18, 20 zurückgehaltenen Stoffe, also z. B. körperliche Gegenstände wie etwa Beutel, Holzstücke, Bälle u. dgl., Sand, Kies und Fäkalienschlamm, werden, wie in Fig. 2 angegeben, einem Pufferbehälter 22 zugeführt. Dieser Pufferbehälter soll im Ausführungsbeispiel nur für kontinuierliche oder schrittweise Vergleichmäßigung des Weitertransports der abgesonderten Feststoffe sorgen, da deren mengenmäßiger Anfall über den Tagesablauf sehr ungleichmäßig ist. Im Hinblick auf diese alleinige Funktion kann der Pufferbehälter 22 ein verhältnismäßig kleines Volumen haben. Die sich dort sammelnden Feststoffe gelangen im konkreten Ausführungsbeispiel über einen Zerkleinerer 24, der die gröberen Bestandteile zerstückelt, in eine als Konzentrator 26 bezeichnete Schlamm-Entwässerungseinrichtung, welche die Funktion hat, das Volumen des aus dem Behälter 10 über einen Feststoffauslaß 27 abzusaugenden oder abzupumpenden Schlamms zu reduzieren. Das dem Schlamm entzogene Wasser kann einer der Filtereinrichtungen 16, 18, 20 oder hinter diesen dem Wasserauslaß 14 zugeführt werden.

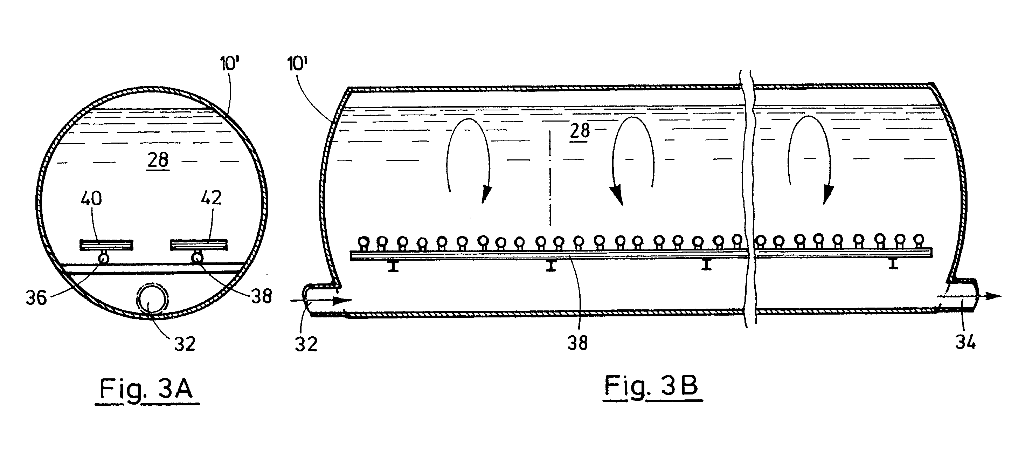

Die in der Zeichnung dargestellte, in Wasser absenkbare und unter Wasser zu betreibende Kläranlage enthält außerdem eine einlaßseitig an die Filtereinrichtung 20 und auslaßseitig an den Wasserauslaß 14 angeschlossene Reinigungsstufe 28, die hier als $O_2$-Reaktor bezeichnet ist. In diesem Reaktor kann das zuvor von Feststoffen befreite Abwasser intensiv mit Sauerstoff behandelt werden, ggf. sogar nur mit Sauerstoffgas statt Luft. Vorzugsweise wird die biologische Reinigungsstufe 28 in einem oder mehreren separaten Großbehältern 10' installiert, wie in Fig. 3 A, B dargestellt, um ausreichende Volumina für die aerobe Abwasserreinigung zu erhalten.

Als weitere Klärstufe ist im Beispielsfall ein Textilfilter 30 in Form z. B. eines an der Wasserauslaßleitung befestigten Filterschlauchs vorgesehen. Dieser läßt sich, ggf. durch einen Arbeitstaucher, von Zeit zu Zeit auswechseln. Der Schlamm kann auch in Zeiten schwacher Beaufschlagung aus dem Filterschlauch zurückgesaugt und über den Pufferbehälter 22 entsorgt werden. Ggf. könnte ein Filter auch noch innerhalb des Großbehälters 10' an dem Wasserauslauf angeordnet sein, um den gebildeten Belebtschlamm zurückzuhalten.

Es entsteht keine Geruchsbelästigung, da der Großbehälter 10 ringsum geschlossen und nur durch einen nicht gezeigten, verschließbaren Einstieg begehbar ist, um die im Innenraum installierten maschinellen Geräte warten zu können oder ggf. über einen in den Behälter 10 einführbaren Saugschlauch Schlamm und/oder Wasser von bestimmten Sammelstellen abzusaugen. Im Beispielsfall ist der Großbehälter 10 über einen aus dem Wasser ragenden Belüftungsschacht mit einem desodorierenden Filter 32, z. B. mit Aktivkohle, entlüftet. Dieser Schacht könnte auch als Einstieg dienen. Er wird in seiner Länge entsprechend der Wassertiefe bemessen.

In Fig. 3 A und 3 B ist ein Großraumbehälter 10' dargestellt, der die aerobe Reinigungsstufe enthält. Bei Bedarf können auch mehrere derartige Großbehälter 10' in Parallelschaltung oder in Serie angeordnet sein und durch von einander unabhängige, in den jeweiligen Behältern 10' installierte Unterwassergebläse mit unterschiedlichen Drücken betrieben. Die Druckdifferenz kann zur Förderung des Abwassers ausgenutzt werden.

Der Großbehälter 10' hat einen kreisrunden oder im wesentlichen runden Querschnitt, einen Wassereinlaß 32 an seinem einen Ende und einen Wasserauslaß 34 ganz unten am anderen Ende. Der Wasserauslaß 34 führt zu einem Filterschlauch 30 oder einer anderen Filtereinrichtung, welche den im Behälter 10' gebildeten Belebtschlamm zurückhält.

Oberhalb des Behälterbodens sind im unteren Bereich des Behälters 10', z. B. auf Stahlträgern, zwei sich mit Zwischenabstand in Längsrichtung des Behälters erstreckende Luft-Verteilerrohre 36, 38 gelagert, die durch ein nicht gezeigtes Gebläse mit Druckluft beaufschlagt sind. Beide Verteilerrohre 36, 38 sind auf ihrer Oberseite mit einer Vielzahl von im Beispielsfall rohrförmigen, sich quer zur Längsrichtung des Behälters 10' erstreckenden Belüftern 40, 42 verbunden. Diese können einen in der Abwassertechnik bekannten Aufbau haben. Sie sorgen dafür, daß die Luft in möglichst gleichmäßiger, feiner Verteilung in das Wasser gelangt.

Es sollte nach Möglichkeit verhindert werden, daß sich infolge der Belüftung eine gleichmäßig zirkulierende Wasserströmung ergibt. Aus diesem Grunde ist vorzugsweise vorgesehen, daß die beiden Gruppen von Belüftern 40 und 42 in einem bestimmten Zeittakt mit unterschiedlichem Druck beaufschlagt werden, so daß sich abwechselnd mal auf der rechten und mal auf der linken Seite ein etwas stärkerer Auftrieb im Behälter ergibt. Außerdem kann der Großbehälter 10', wie in Fig. 3 B angedeutet, mehrere Abschnitte mit unterschiedlich gesteuerten Belüftern enthalten, wobei in benachbarten Abschnitten die in derselben Reihe angeordneten Belüfter unterschiedlich mit Luft beaufschlagt werden, indem z. B. für jeden Abschnitt gesonderte Verteilerrohre 36, 38 installiert sind. Es ergeben sich dann in den benachbarten Abschnitten unterschiedliche Auftriebsverhältnisse, so daß sich insgesamt keine einheitliche Strömung im Kreislauf ausbilden kann. Die Taktzeit, während der in einem bestimmten Abschnitt ein bestimmtes Druckverhältnis zwischen den beiden Belüftern 40, 42 herrscht, beträgt beispielsweise nur einige Minuten. Benachbarte Abschnitte können mit unterschiedlichen Taktzeiten die Druckverhältnisse ändern.

Darüber hinaus besteht die Möglichkeit, in dem im wesentlichen vollständig gefüllten Behälter 10' Bleche als Strömungshindernisse anzubringen, welche ebenfalls eine Wasserzirkulation zu verhindern helfen.

Schließlich kann auch statt der Verteilerrohre 36, 38 und der einzelnen Belüfter 40, 42 eine sog. Flächenbelüftung mit über die gesamte Fläche gleichmäßigem feinblasigen Gasaustritt, z. B. durch Poren in einem doppelten Boden oder in einer über dem Boden aufgespannten Folie, Verwendung finden.

Der Behälter 10' hat in seinem obersten Bereich einen sich im wesentlichen über seine gesamte Länge erstreckenden, verhältnismäßig kleinen Luftraum, der über einen nicht gezeigten Luftauslaß mit einem Höchstdruckventil entlüftet wird. Auch hierbei findet vorzugsweise eine Desodorierung statt. Zu Wartungszwecken läßt sich durch Gasüberdruck das Abwasser aus dem Behälter 10' drücken.

Die Erfindung bietet den Vorteil, daß als Kompressoren für die Druckluft in den Großbehältern 10 bzw. 10' installierte Unterwasser-Gebläse eingesetzt werden können, wodurch eine natürliche Schalldämmung erhalten wird. Im Einzelfall kann auch die Abluft aus dem ersten Großbehälter 10 in einen der weiteren Großbehälter 10' gepumpt und mit zur aeroben Behandlung benutzt werden. Das Ansaugen und Ausblasen der Luft erfolgt z. B. über Schlauch- oder Rohrleitungen, die an Bojen über der Wasseroberfläche münden.

Die erfindungsgemäße Vorrichtung gestattet zahlreiche Ausgestaltungen und Abwandlungen. Grundsätzlich können die Arbeitsfolge und Wirkungsweise dem jeweiligen Bedarf durch baukastenartiges Kombinieren standardisierter Komponenten gestaltet werden. Dabei geht es mit Bezug auf den Strömungsweg des Abwassers um folgende Funktionen bzw. Einrichtungen: Grobfiltern, Feinfiltern, Feinstfiltern, intensives Zuführen von Sauerstoff, Zurückhalten des Belebtschlamms, teilweises Zurückführen des Belebtschlamms, Abführen des Belebtschlamms und Entkeimen, z. B. durch Chloren oder UV-Bestrahlung, des an den Vorfluter abzugebenden Abwassers. Bei der Behandlung der abzusondernden Feststoffe bzw. des Schlamms geht es um folgende Arbeitsschritte bzw. Einrichtungen: Aussortieren von nicht zerkleinerungsfähigen Grobstoffen, Zerkleinern von zerkleinerungsfähigen Stoffen, Puffern der ungleichmäßig anfallenden Feststoffe zur gleichmäßigen Auslastung der nachfolgenden Ausrüstungen, Eindicken und schließlich wahlweise alternativ Abtransportieren mit Saugwagen, Abtransport durch Pumpen oder Saugen, Entwässern und Abtransport mit LKW zu einer gesonderten Schlammbehandlungsstätte.

Wenn einige der vorstehend aufgeführten Funktionen wegen der Zusammensetzung des Abwassers oder mit Rücksicht auf den Zustand des Vorfluters im Einzelfall nicht benötigt werden, können sie entfallen, und es kann ein dementsprechend kleinerer Behälter 10 zum Einsatz kommen. Man kann auch von vornherein einen größeren Behälter 10 wählen und darin später hinzukommende Einrichtungen installieren. Schließlich wird man vorzugsweise statt eines einzigen Großbehälters 10 deren zwei oder mehr vorsehen und beispielsweise die mechanischen Filtereinrichtungen 16, 18, 20 in einem ersten und den O$_2$-Reaktor in wenigstens einem weiteren Großbehälter installieren. Die Großbehälter lassen sich einzeln oder nach Art von Schubschiffen gemeinsam schwimmend transportieren. In allen Fällen besteht die weitere Möglichkeit, die transportable Kläranlage insgesamt oder teilweise mit einem oder mehreren Großbehältern 10, 10' zu entfernen und die entfernten Einheiten gegen größere auszutauschen. Hierbei entfallen Bauarbeiten weitestgehend.

Ganz besonders vorteilhaft ist die zur Station gewordene Schwimmbehälter-Lösung für Badeorte, in denen fast das ganze Jahr über Saison ist, weil das Einschwimmen und Absenken der komplett vormontierten Großbehälter 10, 10' mitsamt den darin installierten Kläreinrichtungen und das Anschließen an das Abwasserrohr, durch welches bisher das Abwasser ungereinigt in den Vorfluter geleitet wurde, innerhalb weniger Wochen durchzuführen ist. Falls eine längere Rohrleitung in den Vorfluter hinausführt, kann die vorgeschlagene Vorrichtung an deren Ende angebracht oder in Ufernähe zwischengeschaltet und eventuell als Aussichtsplattform oder Parkplatz genutzt und zu diesem Zweck ggf. überdacht werden.

Der Schlamm sollte in Badeorten nach Möglichkeit durch Abpumpen oder Absaugen über Leitungen, die oberhalb des Grundwasserspiegels verlegbar sind, zu einem geeigneten Ort transportiert werden, an dem die Schlammbehandlung nicht stört. Diese kann aber auch in einer bereits vorhandenen Kläranlage im Landesinneren mit durchgeführt werden, so daß das Faulgas auch in bisher starken Lärm erzeugenden Gasmotoren voll genutzt werden kann und eine weitgehende Energie-Autarkie der Kläranlage erreicht wird.

Wenn ein Badeort mehrere Abwasser-Einleitungsrohre besitzt, bietet sich die zusammengefaßte Behandlung des Schlamms aller dieser Einleitungsstellen an.

Eine transportable Kläranlage nach dem erfindungsgemäßen Vorschlag kann, wenn sie ersetzt werden soll, in verhältnismäßig einfacher Weise wieder vom Grund des Gewässers gehoben und schwimmend an eine andere Anwendungsstelle gebracht werden. Die Station ist daher auch zur Überbrückung einer Zwischenzeit von mehreren Jahren geeignet, die gebraucht wird, um eine Kläranlage nach konventioneller Bauweise zu erstellen.

Geht es um einen Vergleich zwischen einer konventionell errichteten und einer erfindungsgemäß gestalteten Kläranlage, ist zu berücksichtigen, daß sich Kostenvorteile für die neue Vorrichtung u. a. durch den Wegfall der Finanzierungskosten während einer langen Bauzeit ergeben. Außerdem können ohne Umschaltschwierigkeiten in mehreren Zeitabschnitten Kapazitätserweiterungen vorgenommen oder zusätzliche Einrichtungen eingebaut werden. Man kommt also ohne eine anfängliche Überdimensionierung im Hinblick auf zukünftigen Bedarf aus. Schließlich macht sich auch vorteilhaft bemerkbar, daß die gesamte transportable Vorrichtung in der im Maschinenbau üblichen Art vormontiert angeliefert wird. Durch Standardisierung und Typisierung ist eine Serienfertigung möglich. Die bisher viele Monate oder gar mehrere Jahre dauernde, teure örtliche Montage von 30 bis 50 verschiedenen Gewerken entfällt.

**Patentansprüche**

1. Vorrichtung zur Klärung von Abwasser mit mehreren hintereinander geschalteten Filtereinrichtungen, **dadurch gekennzeichnet,** daß die mechanischen Filtereinrichtungen (16, 18, 20) zusammen mit einem Pufferbehälter (22) für abgefilterte Feststoffe in einem wasserdicht geschlossenen, tauchbaren Großbehälter (10) mit Anschlüssen für einen Abwassereinlauf (12) und einen Wasserauslauf (14) und in demselben und/oder wenigstens einem weiteren Großbehälter zusätzlich eine einlaßseitig an die Filtereinrichtungen (16, 18, 20) und auslaßseitig an den Wasser-auslauf angeschlossene Kläreinrichtung (28) mit Sauerstoffzufuhr installiert sind.

2. Vorrichtung nach Anspruch 1, **dadurch gekennzeichnet,** daß die Großbehälter schwimmfähig sind.

3. Vorrichtung nach Anspruch 1 oder 2, **dadurch gekennzeichnet,** daß in dem Großbehälter (10) zusätzlich eine einlaßseitig an den Pufferbehälter (22) und auslaßseitig an einen Feststoffauslaß (27) angeschlossene Zerkleinerungseinrichtung (24) angeordnet ist.

4. Vorrichtung nach einem der Ansprüche 1 bis 3, **dadurch gekennzeichnet,** daß in dem Großbehälter (10) zusätzlich eine einlaßseitig an den Pufferbehälter (22) oder die Zerkleinerungseinrichtung (24) und/oder die Kläreinrichtung (28) mit Sauerstoffzufuhr und auslaßseitig an den Feststoffauslaß (27) angeschlossene Schlamm-Entwässerungseinrichtung (26) installiert ist.

5. Vorrichtung nach einem der Ansprüche 1 bis 4, **dadurch gekennzeichnet,** daß am Wasserauslaß (14) innerhalb oder außerhalb des Großbehälors (10) ein Filter (30) angebracht ist.

6. Vorrichtung nach Anspruch 5, **dadurch gekennzeichnet,** daß am Filter (30) angesammelter Schlamm über eine Saugleitung zur Schlamm-Entwässerungseinrichtung (26) förderbar ist.

7. Vorrichtung nach einem der Ansprüche 1 bis 6, **dadurch gekennzeichnet,** daß der Innenraum des Großbehälters (10) über desodorierende Filter (32) mit der Außenatmosphäre in Verbindung steht.

8. Vorrichtung nach einem der Ansprüche 1 bis 7, **dadurch gekennzeichnet,** daß die als aerobe Reinigungsstufe dienende Kläreinrichtung (28) mit Sauerstoffzufuhr mit Überdruck betreibbar ist.

9. Vorrichtung nach Anspruch 8, **dadurch gekennzeichet,** daß die als aerobe Reinigungsstufe dienende Kläreinrichtung (28) mehrere in Serie hintereinander angeordnete Großbehälter (10') umfaßt, die mit unterschiedlichem Druck beaufschlagbar sind, wobei der Druck von Behälter (10') zu Behälter (10') abnimmt.

10. Vorrichtung nach einem der Ansprüche 1 bis 9, **dadurch gekennzeichnet,** daß in der als aerobe Reinigungsstufe dienenden Kläreinrichtung (28) Luft oder Sauerstoffgas durch einen Flächenbelüfter zuführbar ist.

## Fig. 1

EP 0 446 926 A1

## Fig. 2

EP 0 446 926 A1

Fig. 3B

Fig. 3A

Europäisches
Patentamt

**EUROPÄISCHER
RECHERCHENBERICHT**

Nummer der Anmeldung

**EP 91 10 3954**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | FR-A-2 395 228   (STAMICARBON) <br> * Seite 4; Ansprüche 1-5 * * Seite 1, Zeile 28 - Seite 2, Zeile 5 @ Seite 2, Zeilen 18 - 24 @ Seite 3, Zeilen 17 - 31 * <br> – – – | 1,2,4,10,7 | C 02 F 3/12 <br> C 02 F 3/26 <br> B 01 D 36/02 |
| X | DE-A-3 406 697   (KLÖCKNER-WERKE) <br> * Seite 1; Ansprüche 1, 3, 4, 5 * * Seite 4, Absatz 4 - Seite 5, Absatz 2 * <br> – – – | 1 | |
| A | US-A-4 830 761   (JACK.S.LEACH ET AL.) <br> * Spalte 4, Zeilen 11 - 55; Figur 1 * <br> – – – | 1,5 | |
| A | US-A-2 380 465   (CHESTER F.PROUDMAN) <br> * Seite 2, rechte Spalte, Zeilen 27 - 69 * <br> – – – | 8,9 | |
| A | EP-A-0 070 960   (BAYERISCHE MILCHINDUSTRIE A.G.) <br> * Seite 6, Zeile 28 - Seite 10, Zeile 32 * <br> – – – | 8,9 | |
| A | KORRESPONDENZ ABWASSER. vol. 29, no. 11, November 1982, AUGUSTIN DE Seiten 821 - 825; H.Teichmann: "Geruchsemissionen aus kommunalen Abwasseranlagen" * Seite 824, rechte Spalte * "Adsorption", "Biof ilter" * <br> – – – – – | 7 | |

| | RECHERCHIERTE SACHGEBIETE (Int. Cl.5) |
|---|---|
| | C 02 F <br> B 01 D |

Der vorliegende Recherchenbericht wurde für alle Patentansprüche erstellt

| Recherchenort | Abschlußdatum der Recherche | Prüfer |
|---|---|---|
| Den Haag | 24 Juni 91 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------------
& : Mitglied der gleichen Patentfamilie, übereinstimmendes Dokument